# EUROPÄISCHE PATENTSCHRIFT

(11) **EP 1 114 989 B1**
(45) Veröffentlichungstag und Bekanntmachung des Hinweises auf die Patenterteilung: **26.01.2005**
(21) Anmeldenummer: 00125994.4
(22) Anmeldetag: 28.11.2000
(51) Int. Cl.: G01M 1/18, G01M 1/22

(54) **Vorrichtung zum Messen einer Rotorunwucht**
Device for measuring an unbalance of a rotor
Dispositif pour mesurer un deséquilibre de rotor

(30) Priorität: 05.01.2000 DE 10000235
(43) Veröffentlichungstag der Anmeldung: 11.07.2001
(73) Patentinhaber: Snap-on Equipment GmbH, 64319 Pfungstadt (DE)
(72) Erfinder: Rothamel, Karl, 64372 Ober-Ramstadt (DE); Kühn, Gottfried, 64331 Weiterstadt (DE)
(74) Vertreter: Nöth, Heinz, Dipl.-Phys.

(56) Entgegenhaltungen:
- DE-A- 3 205 630
- DE-A- 3 314 287
- DE-A- 3 423 873
- DE-A- 4 124 285
- GB-A- 1 472 999
- US-A- 2 161 207
- US-A- 2 628 334

## Beschreibung

Die Erfindung betrifft eine Vorrichtung nach dem Oberbegriff des Patentanspruches 1, wie aus der DE 41 24 285 A1 bekannt.

### [Stand der Technik]

Die bekannte Vorrichtung besitzt eine Hauptwelle, welche drehbar in einem Maschinengehäuse gelagert ist und an welcher ein auszuwuchtender Rotor, insbesondere ein Kraftfahrzeugrad befestigt werden kann. Die Hauptwelle wird von einem Einphasen-Wechselstrommotor angetrieben. Dieser besitzt eine einphasige Hauptwicklung und eine phasenmäßig, insbesondere um 90° elektrisch versetzte Hilfswicklung. Die bei einem Einphasen-Wechselstrommotor, insbesondere bei annähernd lastfreiem Lauf auftretenden Pendelschwingungen werden durch einen Schwingkreis reduziert, in den die Hilfswicklung miteinbezogen ist. Im Gegensatz zu Vorrichtungen, bei denen der Antrieb nach Erreichen der Messdrehzahl abgeschaltet oder abgekoppelt wird, kann auch ohne Rad die Unwucht der Hauptwelle und/oder der Spannmittel überprüft bzw. gemessen werden. Ferner sind bei der Justage der Vorrichtung die Messdauer und die Messgenauigkeit nicht begrenzt.

### [Aufgabe der Erfindung]

Aufgabe der Erfindung ist es eine Vorrichtung der eingangs genannten Art zu schaffen, bei der Pendelschwingungen, insbesondere im nahezu lastfreiem Lauf über einen großen Bereich vorwählbarer Meßdrehzahlen unterdrückt werden.

Diese Aufgabe wird erfindungsgemäß durch die kennzeichnenden Merkmale des Patentanspruches 1 gelöst. Die Unteransprüche beinhalten Weiterbildungen der Erfindung.

In bevorzugter Weise wird beim Erreichen der Meßdrehzahl das Drehmoment des Motors nicht vollständig abgeschaltet, sondern auf ein erstes niedriges Drehmoment umgeschaltet. Dieses erste niedrige Drehmoment ist so dimensioniert, dass ein Drehzahlabfall, welcher durch Reibung, insbesondere im Antrieb oder durch Luftwiderstand des drehenden Rotors, insbesondere Kraftfahrzeugrades, verursacht wird, kompensiert wird. Dabei wird das niedrige Drehmoment so bemessen, dass ein leichter Drehzahlanstieg, bis zu einer Drehzahlobergrenze stattfindet. Bei Erreichen der Drehzahlobergrenze wird das Drehmoment auf einen zweiten, etwas niedrigeren Wert reduziert, bei dem die Drehzahl langsam absinkt, oder abgeschaltet und bei Erreichen einer Drehzahluntergrenze wird das erste verminderte Drehmoment wieder eingeschaltet. Hierdurch kann die Messdrehzahl beliebig lange gehalten werden. Die Drehzahl der Hauptwelle kann über einen, in bekannter Weise ausgebildeten Drehzahlgeber bzw. Inkrementalgeber erfasst werden und durch Zweipunktregelung kann die entsprechende Einstellung des Motorstroms zur Erzielung des verminderten Drehmoments zur Aufrechterhaltung der Messdrehzahl zwischen der Obergrenze und der Untergrenze durchgeführt werden. Durch die Zweipunktregelung wird dabei der Motorstrom auf entsprechende zwei Werte eingestellt, welche die Abgabe des ersten und zweiten reduzierten Drehmoments durch den Motor in Abhängigkeit von der Drehzahloberund Drehzahluntergrenze bewirken. Nach dem Meßlauf wird die Hauptwelle in bekannter Weise durch Reversieren des maximalen Motor-Drehmoments bis zum Stillstand abgebremst. Kurz vor dem Stillstand wird der Motor stromlos geschaltet.

Die Reduzierung des vom Motor erzeugten Drehmoments bei Erreichen der Meßdrehzahl kann auf verschiedene Weise erfolgen.

Beispielsweise kann ein elektrischer Widerstand, welcher in den Versorgungsstrang der Hauptwicklung und Hilfswicklung geschaltet wird, oder durch Verringerung der Spannung im Versorgungsstrang erreicht werden. Der Widerstand kann als Blindwiderstand oder ohmscher Widerstand ausgebildet sein. In bevorzugter Weise wird ein induktiver Widerstand in Form einer Drossel verwendet. Dieser Widerstand besitzt eine geringe Eigenerwärmung und sorgt für eine sinusförmige Stromaufnahme, auch wenn dem Netz Oberwellen überlagert sind. Mit Hilfe eines Relais kann der Widerstand überbrückt werden oder die volle Versorgungsspannung wieder angelegt werden, so daß zwischen reduziertem und vollem Drehmoment des Motors geschaltet werden kann. Ferner kann ein Wechselspannungssteller, insbesondere auf Halbleiterbasis, welcher durch Pulsweitenmodulation gesteuert wird, zum Einsatz kommen. Auch durch Hinzuschalten zusätzlicher Motorwicklungen kann ein reduziertes Drehmoment erzielt werden.

Bei der Erfindung kann ein vierpoliger vom Netz gespeister Einphasen-Wechselstrommotor, insbesondere Kondensatormotor zum Einsatz gebracht werden. Das vom Motor erzeugte Drehmoment wird über ein geeignetes Getriebe beispielsweise über einen Riementrieb auf die Hauptwelle der Auswuchtmaschine übertragen. Diese kann z. B. in den Grenzen von 80 bis 210 UPM auf eine vorwählbare Meßdrehzahl beschleunigt und gehalten werden, wobei Pendelschwingungen des Motors bei Erreichen der Meßdrehzahl durch das Absenken des Drehmoments und die erläuterte Zweipunktregelung vermieden werden. Dies resultiert insbesondere daraus, daß der Motor nur ein kleines Drehmoment abgibt und mögliche Pendelschwingungen im Verhältnis der Absenkung des Drehmoments verringert sind. Die Netzfrequenz hat praktisch keinen Einfluß auf die Meßdrehzahl. Der Stromverbrauch und somit die Erwärmung des Motors wird reduziert, da der Motor, insbesondere bei Verwendung eines induktiven Widerstandes, im Strompfad der Haupt-wicklung immer eine sinusförmige Stromaufnahme hat.

Das Abbremsen der Hauptwelle ist durch Reversieren des Motordrehmoments möglich, so daß eine separate Betriebsbremse nicht erforderlich ist. Dabei kann das Abbremsen in die gewünschte Ausgleichsposition in der einen Ausgleichsebene und das Eindrehen in die Ausgleichsposition der anderen Ausgleichsebene durchgeführt werden. Hierzu werden bevorzugt gleiche Wicklungen für die Haupt- und Hilfswicklung verwendet. Die Messung der Unwucht der Hauptwelle und/oder der Spannmittel ohne Rad- bzw. Schwungmasse, ist mit beliebiger Meßdauer möglich. Durch die Zweipunktregelung beim reduzierten Drehmoment kann die Meßdrehzahl beliebig lange in engen Grenzen (Drehzahlobergrenze, Drehzahluntergrenze) gehalten werden.

### [Beispiele]

In den Figuren wird an Ausführungsbeispielen die Erfindung noch näher erläutert. Es zeigt:
- Fig. 1: ein erstes Ausführungsbeispiel;
- Fig. 2: ein zweites Ausführungsbeispiel;
- Fig. 3: ein drittes Ausführungsbeispiel;
- Fig. 4: ein viertes Ausführungsbeispiel;
- Fig. 5: ein Blockschaltbild zur Erläuterung eines Bauteils, das bei dem in Fig. 3 dargestellten Ausführungsbeispiels zum Einsatz kommt; und
- Fig. 6: ein Blockschaltbild zur weiteren Erläuterung des Ausführungsbeispiels der Fig. 3.

Bei den Ausführungsbeispielen ist schematisch eine Hauptwelle 1 einer Auswuchtmaschine, die insbesondere als Radauswuchtmaschine ausgebildet ist, dargestellt. Auf der Hauptwelle 1 ist ein Rotor 2 aufgespannt, welcher ein auszuwuchtendes Kraftfahrzeugrad sein kann. Zur Ermittlung der Unwucht wirkt die Hauptwelle mit nicht näher dargestellten Meßgebern zusammen, die an eine Auswerteschaltung in bekannter Weise angeschlossen sind.

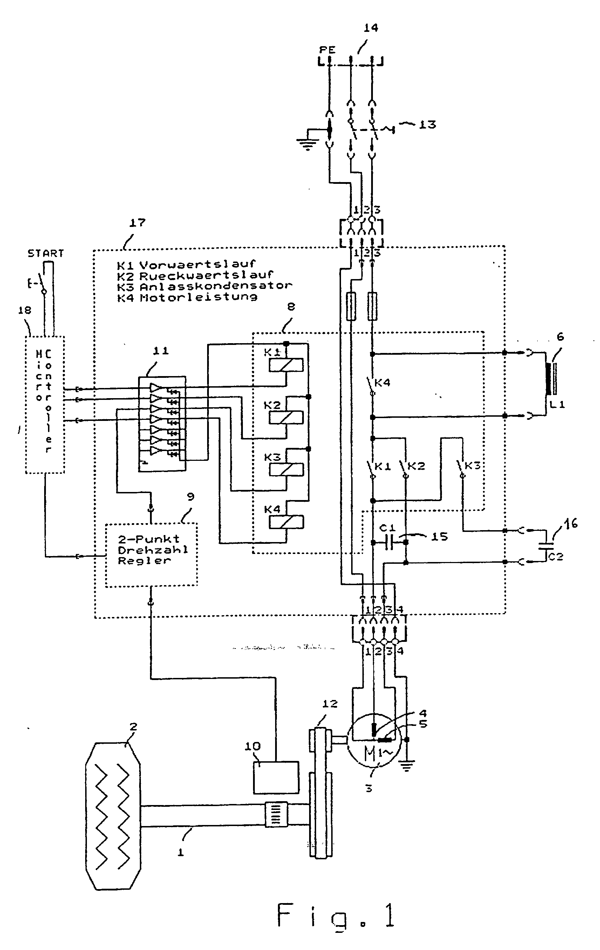

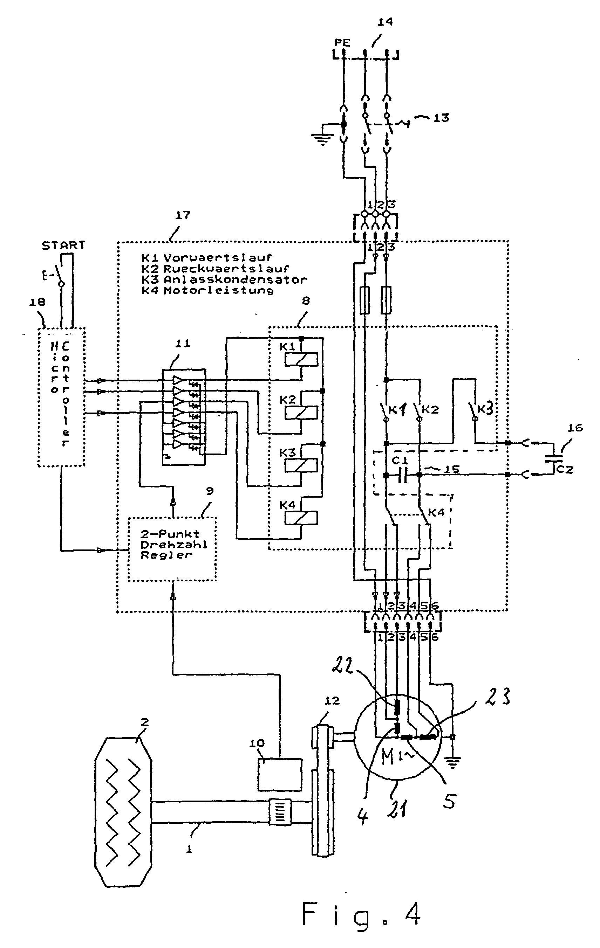

Der Antrieb der Hauptwelle besitzt einen Einphasen-Wechselstrommotor 3 (Fig. 1 bis 3) bzw. 21 (Fig. 4). Das vom Motor 3 erzeugte Drehmoment wird über ein Getriebe 12 auf die Hauptwelle 1 übertragen. In bevorzugter Weise kommt ein Riemengetriebe, insbesondere Keilrippenriemen zur Anwendung. Ein derartiges Getriebe ermöglicht eine Änderung der Riemenspannung, wodurch die im Riemengetriebe auftretende Reibung vergrößert oder verkleinert werden kann. Hierdurch läßt sich die Anstiegsrate der Meßdrehzahl, insbesondere bei der Zweipunktregelung im Bereich der Meßdrehzahl beeinflussen.

Der Einphasen-Wechselstrommotor 3, besitzt in bevorzugter Weise eine vierpolige Statorwicklung, welche eine Hauptwicklung 4 des Motors darstellt. Zum Anlassen des Motors besitzt dieser eine phasenversetzte (insbesondere 90°) Hilfswicklung 5. Der Motor 3 kann von einem Einphasen-Wechselstromnetz 14 betrieben werden. Die Hauptwicklung 4 und die Hilfswicklung 5 sind bevorzugt gleiche Wicklungen, so dass in beiden Drehrichtungen ein etwa gleich großes Drehmoment erzeugt wird. Hierdurch kann der Motor nach dem Messlauf auch zum Abbremsen des Rotors 2 eingesetzt werden. Mittels eines Netzschalters 13 wird der Motor 3 an das Netz gelegt. Die Stromversorgung erfolgt über eine Motorsteuereinrichtung 17, die im folgenden im einzelnen erläutert wird.

Die Motorsteuereinrichtung 17 besitzt eine Schalteinrichtung 8 mit Schaltelementen K1 bis K4, welche als Relais ausgebildet sein können. Ferner ist eine Schalterstelleinrichtung 11 vorgesehen, durch welche die verschiedenen Schaltelemente K1 bis K4 angesteuert bzw. betätigt werden. Diese Betätigung erfolgt in Abhängigkeit der Drehzahl der Hauptwelle 1, welche von einem Drehzahlgeber 10 (Inkrementalgeber) erfaßt wird. Der Drehzahlgeber 10 ist mit einem Zweipunktregler 9 verbunden, welcher an einen Mikrokontroller 18 angeschlossen ist, in welchem die vom Drehzahlgeber 10 gelieferten Meßwerte für eine Zweipunktregelung auswertet werden.

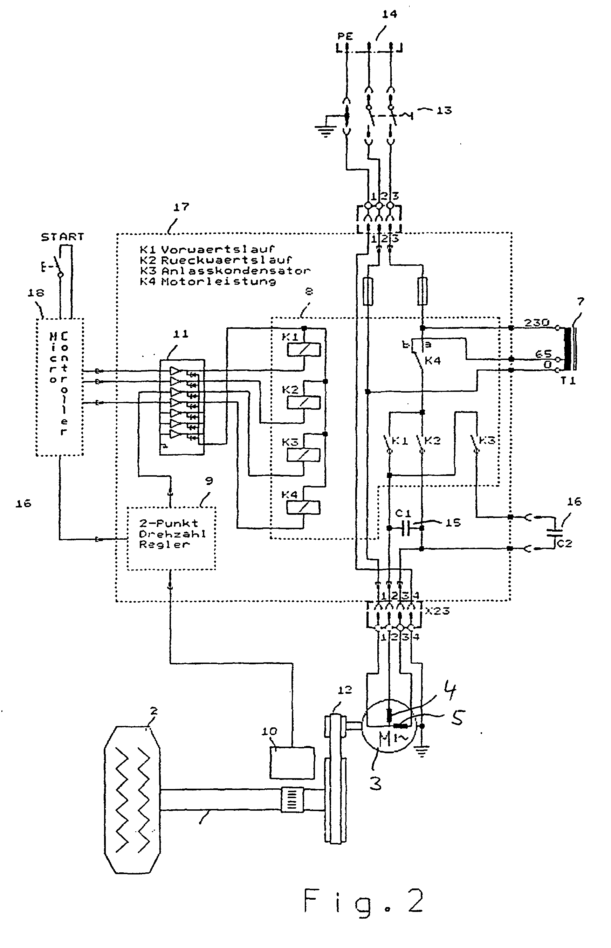

Die Schaltelemente K1 und K4 der Schalteinrichtung 8 dienen zum Schließen und Öffnen des zu den Wicklungen 4 und 5 führenden Versorgungsstranges. Durch das Schaltelement K2 kann das Motordrehmoment reversiert werden. Durch das Schaltelement K3 wird ein Anlaßkondensator 16 zugeschaltet oder abgetrennt. Durch das Schaltelement K4 kann ferner je nach Schaltkontaktstellung ein Widerstand 6, der ein ohmscher oder Blindwiderstand (Kapazität, Induktivität) sein kann, in Reihe in den zu den Wicklungen 4 und 5 führenden Versorgungsstrang geschaltet oder von diesem getrennt werden (Figur 1). Beim Ausführungsbeispiel der Figur 2 kann je nach Stellung des Schaltkontaktes des Schaltelementes K4, die volle Betriebsspannung (Stellung a) oder eine reduzierte Betriebsspannung (Stellung b) an die Hauptwicklung 4 des Motors 3 gelegt werden. Die reduzierte Betriebsspannung wird von einem Mittenabgriff eines Transformotors 7 genommen.

Die Arbeitsweise der beiden in den Figuren 1 und 2 dargestellten Vorrichtungen ist folgende, wobei der Betrieb als Langsamläufer mit einer Drehzahlobergrenze von etwa 100 UPM und weniger und als Schnellläufer mit einer Drehzahlobergrenze von ca. 210 UPM und mehr beschrieben wird.

Beim Betätigen einer Starttaste werden zunächst die Schaltelemente (Relais) K1 und K3 eingeschaltet. Beim Ausführungbeispiel der Figur 1 befindet sich somit der Widerstand 6 im Versorgungsstrang der beiden Wicklungen 4 und 5. Beim Ausführungsbeispiel der Figur 2 befindet sich das Schaltelement K4 in der Schaltstellung b. Hierdurch wird die verringerte Versorgungsspannung an die Wicklungen 4 und 5 gelegt. Dabei wird die Wicklung 5 in beiden Ausführungsbeispielen über den Anlasskondensator und den Betriebskondensator 15 phasenverschoben mit Strom versorgt. Der Antrieb der Hauptwelle erfolgt zunächst mit verringertem Drehmoment. Da für die Steuerelektronik nicht bekannt ist, ob auf der Hauptwelle ein Rotor aufgespannt ist oder nicht, steigt die Drehzahl schnell an. Wird dies aufgrund der vom Drehzahlgeber gelieferten Signale vom Mikrokontroller 18 festgestellt, erübrigt sich das Einschalten der vollen Leistung, d.h. das Schließen des Schaltelementes K4 und damit die Überbrückung des Widerstandes 6. Beim Ausführungsbeispiel in der Figur 1 verbleibt daher das Schaltelement K4, in der dargestellten geöffneten Stellung. Beim Ausführungsbeispiel der Figur 2 verbleibt das Schaltelement K4 in der Anfangsschaltposition b.

Beim Abbremsen der Hauptwelle 1, durch Reversieren des zugeführten Stromes bleibt das Schaltelement K4 ebenfalls in der Ausgangsposition, d. h. in der in Figur 1 dargestellten geöffneten Position und in der Figur 2, in der Schaltposition b.

Wenn die Drehzahl der angetriebenen Hauptwelle 1 langsam oder gar nicht ansteigt, wird im Ausführungsbeispiel der Figur 1, das Schaltelement K4 geschlossen, so daß der Widerstand 6 überbrückt wird. Hierdurch werden die Wicklungen 4 und 5 zur Abgabe der vollen Motorleistung versorgt. Bei Erreichen einer bestimmten Drehzahl (Nenndrehzahl) wird durch Öffnen des Schaltelementes K3 der Anlaßkondensator 16 abgeschaltet, so dass dieser den weiteren Drehzahlanstieg nicht behindert. Die Hauptwelle mit dem darauf aufgespannten Rotor (z.B. Kraftfahrzeugrad) wird mit annähernd konstantem Drehmoment, bis zur Meßdrehzahl innerhalb kurzer Zeit beschleunigt. Die Übersetzung des Getriebes 12, insbesondere des Riemengetriebes ist so ausgelegt, daß vor Annäherung die Synchrondrehzahl und dem damit verbundenen Drehmomentabfall, die Meßdrehzahl erreicht wird.

Falls die Auswuchtmaschine als Langsamläufer bei niedriger Drehzahl von < 100 UPM die Unwucht mißt, wird bei Erreichen der Meßdrehzahl das Schaltelement K4 im Ausführungsbeispiel der Figur 1 geöffnet, so daß der Widerstand 6 in den Versorgungsstrang der Wicklungen 4 und 5 geschaltet ist. Falls die Auswuchtmaschine als Schnelläufer die Unwucht bei hoher Drehzahl von > 210 UPM mißt, wird ebenfalls bei Erreichen der entsprechenden Meßdrehzahl im Ausführungsbeispiel der Figur 1 das Schaltelement K1 geöffnet, so daß der Widerstand 6 im Versorgungsstrang der Wicklungen 4 und 5 liegt.

Beim Ausführungsbeispiel der Figur 2 wird für den Fall, daß auf der Hauptwelle der Rotor 2 aufgespannt ist, das Schaltelement K4 in die Schaltposition a gebracht, so daß die volle Versorgungsspannung an den Wicklungen 4 und 5 anliegt. Bei Erreichen der Messdrehzahl sowohl im Falle des Langsamläufers als auch des Schnellläufers wird das Schaltelement K4 wieder in die Schaltposition b zurückgebracht, so daß die verringerte Versorgungsspannung an die Wicklungen 4 und 5 des Motors 3 gelegt ist.

Durch den insbesondere als Drossel (induktiver Widerstand) ausgebildeten Widerstand 6 in der Figur 1 und durch die verringerte Versorgungsspannung in der Figur 2, welche von einer Mittenanzapfung eines Transformators 7 geliefert werden kann, wird bei Erreichen der Meßdrehzahl vom Motor 3 ein verringertes Drehmoment geliefert. Hierdurch sind Pendelschwingungen wesentlich reduziert. Das gelieferte Drehmoment ist durch entsprechende Dimensionierung des Widerstandes 6 bzw. der reduzierten Versorgungsspannung so bemessen, daß ein leichter Drehzahlanstieg bei Kompensierung der im Antrieb vorhandenen Reibung und des Luftwiderstandes, der bei der Drehung des Rotors 2 entsteht, erreicht wird. Diese Drehzahl steigt relativ langsam an und ist durch eine Drehzahlobergrenze, welche bei einem Langsamläufer, beispielsweise 100 UPM betragen kann, erreicht. Diese Drehzahlobergrenze ist als Vergleichswert im Mikrokontroller 18 gespeichert. Falls die Unwuchtmeßvorrichtung als Schnelläufer wirkt (Meßdrehzahl bei ca. 210 UPM), liegt die Drehzahlobergrenze geringfügig über diesen Wert. Die zum Messen der Unwucht notwendige Anzahl der Umdrehungen wird in den meisten Fällen vor Erreichen der Drehzahlobergrenze abgelaufen sein, so daß dann wie im einzelnen noch erläutert wird, mit dem Abbremsen durch Reversieren des Motordrehmoments begonnen werden kann.

Falls die zur Messung erforderliche Anzahl der Umdrehungen beim Erreichen der Drehzahlobergrenze noch nicht abgelaufen ist, wird das Schaltelement K1 geöffnet, wie es in den Figuren 1 und 2 gezeigt ist, und die Drehzahl nimmt ab. Sobald die Drehzahluntergrenze erreicht wird, wird das Schaltelement K1 wieder geschlossen, so daß die begrenzte Stromversorgung über den Widerstand 6 bzw. die reduzierte Spannungsversorgung der Wicklungen 4 und 5 wieder in Gang gesetzt wird. Da der Motor dabei ein nur reduziertes Drehmoment liefert, werden sich ergebende Pendelschwingungen erheblich reduzieren.

Die Regelung zwischen der Drehzahlobergrenze und Drehzahluntergrenze in unmittelbarer Nähe der jeweiligen Meßdrehzahl wird vom Zweipunktregler 9 in Abhängigkeit von der durch den Drehzahlgeber 10 gemessenen und vom Mikrokontroller 18 ausgewerteten Drehzahl der Hauptwelle 1 geregelt und die Schalterstelleinrichtung 11 entsprechend angesteuert. Durch die Schalterstelleinrichtung 11 werden die entsprechenden Schaltelemente K1 bis K4, welche bevorzugt als Relais ausgebildet sind, betätigt bzw. angesteuert.

Es können somit auch lang andauernde Meßläufe, sowie Meßläufe mit geringer Schwungmasse auf der Hauptwelle 1 durchgeführt werden.

Wenn die zum Messen der Unwucht notwendige Anzahl von Umdrehungen abgelaufen ist, wird das Schaltelement K1 abgeschaltet, bzw. geöffnet und kurz darauf die Schaltelemente K2, K3 und K4 eingeschaltet. Dabei wird das volle reversierte Drehmoment des Motors zum Abbremsen der Hauptwelle 1 wirksam. Kurz vor dem Stillstand der Hauptwelle 1 werden alle Schaltelemente K1 bis K4 abgeschaltet.

Durch die Erfindung wird während der Unwuchtmessung ein ruhiger Lauf der Hauptwelle 1 erreicht. Da der Motor während der Unwuchtmessung nur ein kleines Drehmoment abgibt, sind die Pendelschwingungen im Verhältnis der Absenkung des Drehmoments verringert. Es kann insbesondere bei der Messung der Unwucht der Hauptwelle 1 und der Spannmittel, d. h. ohne Schwungmasse bzw. Rotor 2, eine große Anzahl an Meßumläufen durchgeführt werden. Diese Unwuchtmessung kann mit beliebiger Meßdauer durchgeführt werden. Aufgrund der Zweipunktregelung, welche durch das Zusammenwirken des Mikrokontrollers 18 und des Zweipunktsreglers 9 in Verbindung mit dem Drehzahlgeber 10 erreicht wird, kann die Meßdrehzahl beliebig lange in engen Grenzen gehalten werden.

Das Abbremsen der Hauptwelle 1 kann durch Reversieren des Motordrehmoments erfolgen, so daß eine separate Betriebsbremse nicht benötigt wird. Es kann ein Riementrieb, der etwas Reibung erzeugt, verwendet werden. Hierdurch wird erreicht, daß die Hauptwelle von einer kleinen statischen Unwucht nicht in Bewegung gesetzt wird. Die Reibung wird wie schon erläutert bei der Zweipunktdrehzahlregelung um die Meßdrehzahl durch das dabei vom Motor gelieferte reduzierte Drehmoment überwunden. Ferner kann bei einem Riemengetriebe die Anstiegsrate der Messdrehzahl beim Nachtreiben während der Zweipunktregelung durch entsprechende Einstellung der Riemenspannung beeinflusst werden.

Bei Verwendung einer Drossel als Widerstand 6 (Fig. 1) in Serie mit dem Motor 3 zum Absenken des Drehmoments hat folgende Vorteile:

Die Drossel hat als Blindwiderstand eine geringe Eigenerwärmung und kann daher im Gehäuse der Elektronik untergebracht werden (einfache Verdrahtung). Die Drossel reduziert eventuell dem Netz überlagerte Oberwellen, so dass der Motor 3 während der Messung optimal ruhig läuft. Geeignete Drosseln werden in großen Stückzahlen als Vorschaltgerät für Leuchtstoff-Lampen hergestellt und sind daher kostengünstig am Markt erhältlich.

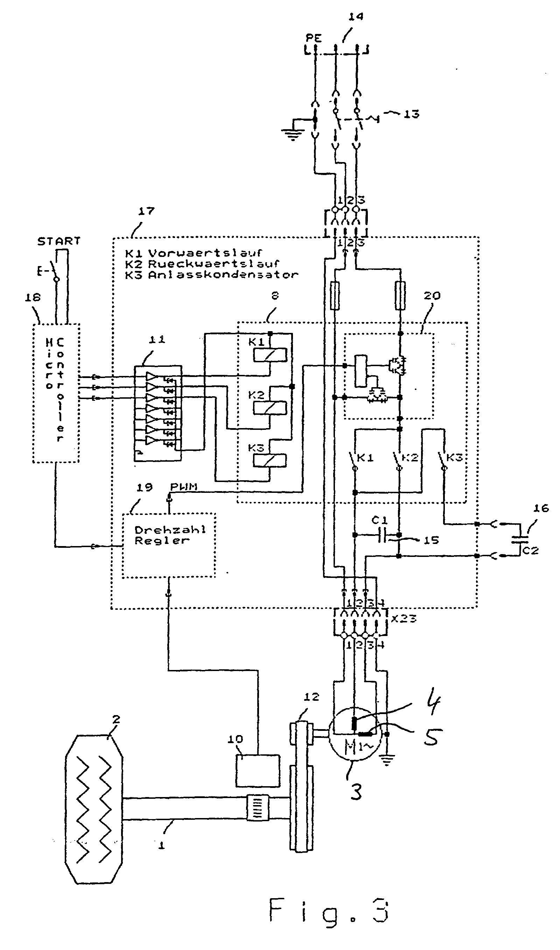

In der Fig. 3 ist ein weiteres Ausführungsbeispiel der Erfindung dargestellt, bei welchem die Einrichtung zur Reduzierung des Motorstroms einen Wechselspannungssteller 20, insbesondere auf Halbleiterbasis aufweist, der von einem Regler 19 in Abhängigkeit von der jeweiligen Drehzahl des Rotors 2 gesteuert wird. In bevorzugter Weise ist der Drehzahlregler 19 als Pulsweitenmodulator ausgebildet. Der Wechselspannungssteller 20 ersetzt die Funktionen des Schaltelementes K4 und des elektrischen Widerstandes 6 bzw. des Transformators 7 in den Ausführungsbeispielen der Fig. 1 und 2. Die übrigen Bauelemente des Ausführungsbeispiels der Fig. 3 entsprechen denen in den Fig. 1 und 2 und sind hierzu mit den gleichen Bezugsziffern versehen.

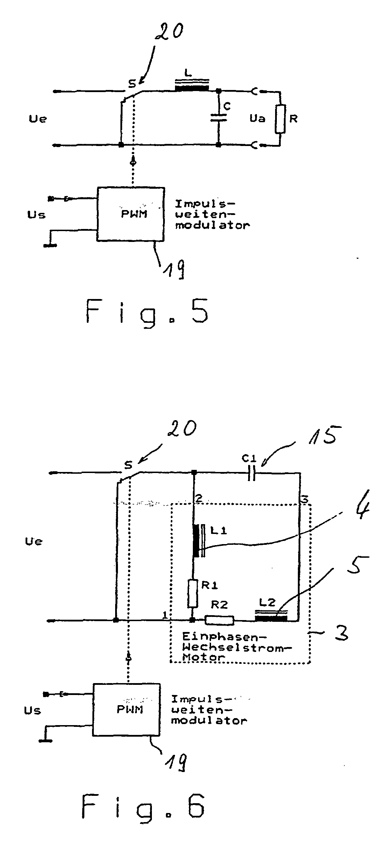

Die Arbeitsweise des in Fig. 3 dargestellten Ausführungsbeispiels wird im einzelnen unter Hinzuziehung der Fig. 5 und 6 wie folgt erläutert.

Die Wirkungsweise des Wechselspannungsstellers ist die eines zum Herabsetzen von Gleichspannungen zur Anwendung gebrachten Abwärtswandlers, wie er beispielsweise in U. Tietze, C. Schenk "Halbleiter-Schaltungstechnik", Springer-Verlag, 11. Auflage, Seiten 979 bis 982 beschrieben ist. Die Netzspannung 14 (Ue in Fig. 5 und 6) wird im Tastverhältnis der Puls-Weiten-Modulation PWM in die Ausgangsspannung Ua gemäß folgender Formel transformiert.
Ua = pUe, wobei
P = Tastverhältnis der Puls-Weiten-Modulation.

Es lässt sich somit eine Ausgangsspannung Ua erzeugen, deren Mittelwert je nach Tastverhältnis zwischen der Eingangsspannung Ue (Netzspannung) und Null liegt. Das Tastverhältnis der Puls-Weiten-Modulation kann so geändert werden, dass zwischen dem vollen Drehmoment des Motors und dem reduzierten Drehmoment bei Erreichen der Drehzahl geschaltet werden kann. Wie bei den Ausführungsbeispielen der Fig. 1 und 2 wird die Drehzahl des Rotors 2 durch den Drehzahlgeber 10 erfaßt und über den Mikrokontroller 18 wird nach Auswertung der Drehzahl der Drehzahlregler 19, welcher den Puls-Weiten-Modulator bildet, realisiert. Die Steuerspannung Us für die Änderung des Tastverhältnisses der Puls-Weiten-Modulation wird in Abhängigkeit von der vom Drehzahlgeber 10 erfassten Rotordrehzahl eingestellt. Wie bei den Ausführungsbeispielen der Fig. 1 und 2 kann die Messvorrichtung als Langsamläufer oder Schnellläufer betrieben werden. Bei Erreichen der jeweiligen Meßdrehzahl wird das Tastverhältnis der Puls-Weiten-Modulation so weit geändert bzw. herabgesetzt, dass der Motor das reduzierte Drehmoment erzeugt. Dabei kann der durch die Puls-Weiten-Modulation eingestellte Wert des Versorgungsstromes und damit das vom Motor gelieferte reduzierte Drehmoment so bemessen werden, dass die Drehzahl langsam bis zur Drehzahlobergrenze ansteigt und dann wieder verringert werden, bis die Drehzahl die Drehzahluntergrenze erreicht. Zur Regelung der Drehzahl zwischen diesen beiden Grenzen wird das Tastverhältnis der Puls-Weiten-Modulation entsprechend geändert. Hierdurch ist die Verwirklichung eines PID-Reglers möglich.

Wie insbesondere aus der Fig. 5 zu ersehen ist, werden die Grundbestandteile des Wechselspannungswandlers wie folgt gebildet. Der Leistungsschalter S wird durch einen Leistungsschalter bevorzugt auf Halbleiterbasis gebildet. Die Speicherdrossel L und der Verbraucher R werden vom Motor gebildet. Der Betriebskondensator wirkt gleichzeitig als Glättungskondensator C. In der Fig. 6 ist für den Verbraucher R das Schaltbild des Motors 3 mit den beiden gleich ausgebildeten Wicklungen 4 und 5 (L1, L2) dargestellt.

Da die Spannung am Motor 3 während des Betriebs über die Puls-Breiten-Modulation einstellbar ist, können Einflüsse der Netzfrequenz und der Netzspannung auf das Drehmoment des Motors 3 ausgeglichen werden. Mit dem Wechselspannungssteller 20 kann durch Ansteuern nur während einer Halbwelle der Netzspannung eine in der Amplitude einstellbare pulsierende Gleichspannung an den Motor angelegt werden. Bei drehendem Motor kann hierdurch ein Bremsmotor hervorgerufen werden. Beim Stillstand wird kein Drehmoment erzeugt. Es lässt sich hierdurch eine Positionsbremse zum leichten Auffinden der Ausgleichsposition bzw. Eindrehen in die Ausgleichsposition ohne zusätzlichen Aufwand realisieren, da vor dem Schaltvorgang die Ausgangsspannung des Wechselspannungsstellers auf Null gebracht werden kann, können die Relais K1 und K2 funkenfrei geschaltet werden. Ferner kann eine Überlastung des Motors dadurch vermieden werden, dass man die Temperatur der Wicklungen feststellt. Dies kann durch Anlegen einer Gleichspannung an eine der Motorwicklungen und Erfassung deren ohmschen Widerstandes erfolgen.

Bei dem in der Fig. 4 dargestellten Ausführungsbeispiel, bei dem ebenfalls gleichwirkende Bauteile wie in den vorher beschriebenen Ausführungsbeispielen mit den gleichen Bezugsziffern versehen sind, wird ein Einphasen-Wechselstrommotor verwendet, welcher zusätzliche Wicklungen 22 und 23 aufweist. Die Wicklung 22 kann in Reihe zur Hauptwicklung 4 und die Wicklung 23 kann in Reihe zur Hilfswicklung 5 geschaltet werden. Für den Hochlauf des Motors auf die Messdrehzahl werden, wie bei den vorher beschriebenen Ausführungsbeispielen zunächst die Wicklungen 4 und 5 mit Strom versorgt. Sobald die Messdrehzahl erreicht wird, werden die zusätzlichen Wicklungen 22 und 23 hinzugeschaltet, um das reduzierte Drehmoment zu erzeugen. Die Drehzahlregelung im Bereich der Messdrehzahl erfolgt dann in der gleichen Weise wie beim Ausführungsbeispiel der Fig. 1, nämlich durch Zu- und Abschalten der zusätzlichen Wicklungen 22 und 23 mit Hilfe der Zweipunktregelung des Zweipunktreglers 9.

### [Bezugszeichenliste]

- 1: Hauptwelle
- 2: Rotor
- 3: Motor
- 4: Hauptwicklung
- 5: Hilfswicklung
- 6: elektrischer Widerstand
- 7: Transformator
- 8: Schalteinrichtung
- 9: Zweipunktregler
- 10: Drehzahlgeber
- 11: Schalterstelleinrichtung
- 12: Getriebe
- 13: Netzschalter
- 14: Netz
- 15: Betriebskondensator
- 16: Anlasskondensator
- 17: Motorsteuereinrichtung
- 18 19: Drehzahlregler
- 20: Wechselspannungssteller
- 21: Motor mit zusätzlichen Wicklungen
- 22: Zusätzliche Motorwicklung
- 23: Zusätzliche Motorwicklung

## Patentansprüche

1. Vorrichtung zum Messen einer Rotorunwucht mit einer drehbar in einem Maschinengehäuse gelagerten Hauptwelle, an welchem der zu messende Rotor befestigbar ist, einem Einphasen-Wechselstrommotor für den Antrieb der Hauptwelle mit einphasiger Hauptwicklung (4) und einer phasenmäßig versetzten Hilfswicklung (5) für den Antrieb der Hauptwelle (1) auf eine Messdrehzahl und einer den Motorstrom einstellenden Steuereinrichtung (17), **dadurch gekennzeichnet, dass** die Steuereinrichtung (17) eine Einrichtung (8, 6; 7; 20; 22, 23) aufweist, welche bei Erreichen der Messdrehzahl den an beide Wicklungen (4, 5) des Motors (3; 21) gelieferten Versorgungsstrom reduziert, so dass vom Motor ein vermindertes Drehmoment erzeugt wird, durch welches im wesentlichen ein von Reibung und Luftwiderstand verursachter Drehzahlabfall kompensiert wird.

2. Vorrichtung nach Anspruch 1, **dadurch gekennzeichnet, dass** die den Motorstrom reduzierende Einrichtung (8; 6; 7; 20; 22, 23) den Motorstrom
- bei erreichter Messdrehzahl für einen Drehzahlanstieg bis zu einer Drehzahlobergrenze auf einen ersten Wert zur Erzeugung eines ersten reduzierten Drehmoments einstellt,
- bei Erreichen der Drehzahlobergrenze für einen Drehzahlabfall bis zu einer Drehzahluntergrenze den Motorstrom zur Erzeugung eines zweiten reduzierten-Drehmoments auf einen zweiten Wert einstellt, und
- bei Erreichen der Drehzahluntergrenze den Motorstrom wieder auf den ersten Wert einstellt.

3. Vorrichtung nach Anspruch 1 oder 2, **dadurch gekennzeichnet, dass** die den Motorstrom reduzierende Einrichtung (8, 6; 7; 20; 22, 23) von einem Zweipunkt-Regler (9) gesteuert ist, welcher in Abhängigkeit von der jeweiligen Rotordrehzahl eingestellt ist.

4. Vorrichtung nach einem der Ansprüche 1 bis 3, **dadurch gekennzeichnet, dass** die Haupt- und Hilfswicklung (4, 5) im wesentlichen gleiche Wicklungen sind.

5. Vorrichtung nach einem der Ansprüche 1 bis 4, **dadurch gekennzeichnet, dass** die den Versorgungsstrom reduzierende Einrichtung (6) ein ohmscher Widerstand oder Blindwiderstand ist.

6. Vorrichtung nach Anspruch 5, **dadurch gekennzeichnet, dass** der Blindwiderstand eine Induktivität, insbesondere Drossel ist.

7. Vorrichtung nach einem der Ansprüche 1 bis 4, **dadurch gekennzeichnet, dass** die den Versorgungsstrom verringernde Einrichtung (7) als Transformator ausgebildet ist.

8. Vorrichtung nach einem der Ansprüche 1 bis 4, **dadurch gekennzeichnet, dass** die den Versorgungsstrom verringernde Einrichtung (20) als Wechselspannungswandler ausgebildet ist.

9. Vorrichtung nach Anspruch 8, **dadurch gekennzeichnet, dass** der Wechselspannungswandler (20) ein Halbleiter-Wechselspannungswandler ist, der durch Puls-Breiten-Modulation in Abhängigkeit von der Rotordrehzahl gesteuert ist.

10. Vorrichtung nach einem der Ansprüche 1 bis 4, **dadurch gekennzeichnet, dass** bei Erreichen der Messdrehzahl zusätzliche Wicklungen (22, 23) zu der Haupt- und Hilfswicklung zur Reduzierung des vom Motor (21) erzeugten Drehmoments hinzugeschaltet sind.

## Claims

1. Apparatus for measuring a rotary member unbalance comprising a main shaft which is mounted rotatably in a machine housing and to which the rotary member to be measured can be fixed, a single-phase ac motor for driving the main shaft with a single-phase main winding (4) and an auxiliary winding (5) which is displaced in phase relationship for driving the main shaft (1) up to a measuring speed and a control device (17) which adjusts the motor current, **characterised in that** the control device (17) has a device (8, 6; 7; 20; 22, 23) which when the measuring speed is reached reduces the supply current supplied to both windings (4, 5) of the motor (3; 21) so that the motor produces a reduced torque which substantially compensates for a drop in speed caused by friction and air resistance.

2. Apparatus according to claim 1 **characterised in that** the device (8; 6; 7; 20; 22, 23) for reducing the motor current
- adjusts the motor current when the measuring speed is reached for a rise in speed up to an upper speed limit to a first value for producing a first reduced torque,
- adjusts the motor current when the upper speed limit is reached for a drop in speed to a lower speed limit to a second value to produce a second reduced torque, and
- again adjusts the motor current to the first value when the lower speed limit is reached.

3. Apparatus according to claim 1 or claim 2 **characterised in that** the motor current-reducing device (8, 6; 7; 20; 22, 23) is controlled by a two-step controller (9) which is set in dependence on the respective rotary member speed.

4. Apparatus according to one of claims 1 to 3 **characterised in that** the main and auxiliary windings (4, 5) are substantially identical windings.

5. Apparatus according to one of claims 1 to 4 **characterised in that** the device (6) for reducing the supply current is an ohmic resistor or reactance.

6. Apparatus according to claim 5 **characterised in that** the reactance is an inductance, in particular a choke.

7. Apparatus according to one of claims 1 to 4 **characterised in that** the device (7) for reducing the supply current is in the form of a transformer.

8. Apparatus according to one of claims 1 to 4 **characterised in that** the device (20) for reducing the supply current is in the form of an ac voltage converter.

9. Apparatus according to claim 8 **characterised in that** the ac voltage converter (20) is a semiconductor ac voltage converter which is controlled by pulse width modulation in dependence on the speed of the rotary member.

10. Apparatus according to one of claims 1 to 4 **characterised in that** when the measuring speed is reached additional windings (22, 23) are added to the main and auxiliary windings to reduce the torque produced by the motor (21).

## Revendications

1. Dispositif pour mesurer un déséquilibre de rotor comprenant un arbre principal qui est monté rotatif dans un bâti de machine et sur lequel le rotor à mesurer peut être fixé, un moteur à courant alternatif monophasé pour l'entraînement de l'arbre principal et ayant un enroulement principal (4) monophasé et un enroulement auxiliaire (5) décalé quant à la phase pour l'entraînement de l'arbre principal (1 ) sur une vitesse de rotation de mesure et un dispositif de commande (17) réglant le courant de moteur, **caractérisé par le fait que** le dispositif de commande (17) comporte un dispositif (8 ; 6 ; 7 ; 20 ; 22, 23) qui, lorsque la vitesse de rotation de mesure est atteinte, réduit le courant d'alimentation fourni aux deux enroulements (4, 5) du moteur (3 ; 21) de telle sorte que le moteur produit un couple réduit par lequel une diminution de vitesse de rotation due au frottement et à la résistance de l'air est pour l'essentiel compensée.

2. Dispositif selon la revendication 1, **caractérisé par le fait que** le dispositif (8 ; 6 ; 7 ; 20 ; 22, 23) réduisant le courant de moteur
- lorsque la vitesse de rotation de mesure est atteinte, règle le courant de moteur sur une première valeur pour la production d'un premier couple réduit en vue d'une augmentation de vitesse de rotation jusqu'à une limite supérieure de vitesse de rotation,
- lorsque la limite supérieure de vitesse de rotation est atteinte, règle le courant de moteur sur une deuxième valeur pour la production d'un deuxième couple réduit en vue d'une diminution de vitesse de rotation jusqu'à une limite inférieure de vitesse de rotation, et
- lorsque la limite inférieure de vitesse de rotation est atteinte, règle à nouveau le courant de moteur sur la première valeur.

3. Dispositif selon la revendication 1 ou 2, **caractérisé par le fait que** le dispositif (8 ; 6 ; 7 ; 20 ; 22, 23) réduisant le courant de moteur est commandé par un régulateur à deux positions (9) qui est réglé en fonction de la vitesse de rotation respective du rotor.

4. Dispositif selon l'une des revendications 1 à 3, **caractérisé par le fait que** l'enroulement principal et l'enroulement auxiliaire (4, 5) sont des enroulements sensiblement identiques.

5. Dispositif selon l'une des revendications 1 à 4, **caractérisé par le fait que** le dispositif (6) réduisant le courant d'alimentation est une résistance ohmique ou une réactance.

6. Dispositif selon la revendication 5, **caractérisé par le fait que** la réactance est une inductance, notamment une bobine de self.

7. Dispositif selon l'une des revendications 1 à 4, **caractérisé par le fait que** le dispositif (7) réduisant le courant d'alimentation est conçu comme un transformateur.

8. Dispositif selon l'une des revendications 1 à 4, **caractérisé par le fait que** le dispositif (20) réduisant le courant d'alimentation est conçu comme un convertisseur de tension alternative.

9. Dispositif selon la revendication 8, **caractérisé par le fait que** le convertisseur de tension alternative (20) est un convertisseur de tension alternative à semi-conducteur, qui est commandé par modulation de largeur d'impulsion en fonction de la vitesse de rotation du rotor.

10. Dispositif selon l'une des revendications 1 à 4, **caractérisé par le fait que**, lorsque la vitesse de rotation de mesure est atteinte, des enroulements supplémentaires (22, 23) sont ajoutés à l'enroulement principal et à l'enroulement auxiliaire pour réduire le couple produit par le moteur (21).
